# EUROPEAN PATENT SPECIFICATION

(11) **EP 2 223 587 B1**
(45) Date of publication and mention of the grant of the patent: **09.05.2012**
(21) Application number: 10154027.6
(22) Date of filing: 18.02.2010
(51) Int. Cl.: A01D 17/06, A01D 33/08, A23N 12/00, A23N 12/02, B07B 1/14, B07B 1/15

(54) **A roller**
Rolle
Rouleau

(30) Priority: 27.02.2009 GB 0903393
(43) Date of publication of application: 01.09.2010
(73) Proprietor: Clifton Rubber Co., Ltd., St Ives Cambridgeshire PE27 3FF (GB)
(72) Inventor: Burton, Brian, St Ives, Cambridgeshire PE27 3FF (GB)
(74) Representative: Evens, Paul Jonathan

(56) References cited:
- EP-A1- 1 661 471
- GB-A- 2 432 097
- US-A- 2 983 376
- US-A- 3 267 502
- US-A- 5 373 947
- US-A- 5 697 451
- US-A- 5 775 435

## Description

The present invention relates to a roller for use in apparatus configured to separate a bulb or root crop (e.g. potatoes) from debris, and more particularly (but not exclusively) a method of making the roller.

Apparatus for separating bulb or root crops from debris are well known, see for example EP 0 730 399 and GB 2 432 097. The apparatus typically includes a plurality of spaced-apart rollers, configured to encourage debris to fall between the rollers whilst allowing the crop to pass over the rollers for collection. At least some of the rollers have helical ribs which engage the crop passing through the apparatus. In addition, the ribbed-rollers are configured to deform resiliently in a radial direction to allow debris to fall between the rollers.

EP 1 661 471 discloses a particular form of ribbed-roller as shown in Figure 1. The roller 10 has a resilient sleeve or shell 12 mounted on a rigid core 14 by four supports 16. The shell 12 has four helical ribs 20 spaced equally around its radial outer periphery. The core 14 has an axial bore 22 for receiving a square-section drive shaft. The supports 16 define therebetween four equally spaced openings 24 positioned adjacent the shell 12. Each opening 24 is associated with a respective rib 20 and extends therebeneath in a parallel helix. Each rib 20 is positioned along an end region of its associated opening 24 which is at the front in the direction of rotation of the roller.

The present applicant has appreciated that there are certain limitations with known rollers for use in separating apparatus. In particular, once a mould has been created, it is difficult to vary the roller's resilience to radial deformation to suit different applications.

In accordance with a first aspect of the present invention, there is provided a roller for use in apparatus configured to separate a bulb or root crop from debris, comprising: a resilient sleeve; a substantially rigid core for engaging a drive shaft; and support means extending between the substantially rigid core and the resilient sleeve; wherein the support means comprises a resilient tubular member.

The resilient tubular member obviates the need for the openings in prior art rollers, and prevents ingress of debris into the body of the roller during use. Thus, if the roller is one of a plurality of roller segments mounted on a common drive shaft there may be no need to interconnect adjacent roller segments. The resilient tubular member will deform in sympathy with the resilient sleeve. Thus, by using materials of different stiffness for the resilient tubular member, it is possible to produce rollers of various different stiffnesses without having to alter the mould used to shape the roller. The resilient tubular member may be formed from a resilient polyurethane foam. The resilient sleeve and/or the substantially rigid core may comprise a more hard wearing material, such as solid polyurethane. The resilient sleeve may have a radial thickness which enables it to flex; the substantially rigid core may be thicker and may be reinforced to help resist flexure.

The resilient sleeve may have a smooth radial outer periphery or may have one or more helical ribs on its radial outer periphery. For example, the resilient sleeve may have at least three helical ribs, possibly even six helical ribs, on its radial outer periphery. A plurality of such ribs may be angularly spaced evenly around the radial outer periphery of the resilient sleeve.

The roller may include a plurality of linkages extending through the resilient tubular member and coupling the resilient sleeve directly to the rigid core. The linkages may be integrally formed with either the resilient sleeve or the rigid core, or even both the resilient sleeve and the rigid core. The linkages may extend radially in the roller or may extend non-radially in the roller. The number, shape and size of the linkages may be chosen to control roller stiffness in a radial direction.

The linkages may extend through preformed apertures in the resilient tubular member. The linkages (and any preformed apertures) may be arranged along a helical path. The helical path may have the same pitch as one or more helical ribs on the radial outer periphery of the resilient sleeve. The helical path and corresponding helical rib or ribs may be angularly offset by a predetermined amount to control the radial deformability of the rib. The present applicant believes that the rib will deform radially more easily if the linkages are angularly spaced from the rib than if the linkages are immediately below the rib (i.e. with no angular spacing therebetween).

The radial outer periphery of the resilient sleeve of the roller may have two sets of helical ribs, with one set more closely associated with the plurality of linkages than the other set. In this way, one set of helical ribs may deform radially more easily than the other set.

In accordance with another aspect of the present invention, there is provided a method of fabricating a roller, comprising: providing a mould having a substantially cylindrical cavity with a surface profile; providing a resilient tubular member for insertion into the mould; inserting the resilient tubular member into the mould such that there is an annular space between the surface profile and the resilient tubular member; and filling the mould (e.g. by injecting material into it) to form a core and a resilient sleeve with an outermost surface corresponding to the surface profile, with the resilient tubular member being sandwiched between the core and the resilient sleeve.

The surface profile of the substantially cylindrical cavity may be smooth, or may have at least one recess. The at least one recess may be elongate, and may be at least partially aligned in an axial direction in the substantially cylindrical cavity of the mould. The at least one recess may comprise a helical channel. If there is more than one, the recesses may be circumferentially spaced - possibly equi-spaced - around the substantially cylindrical cavity.

The resilient tubular member may have a peripheral wall with at least one aperture extending therethrough, and the method may further comprise positioning the resilient tubular member in the mould with the at least one aperture in a known angular relationship with the at least one recess of the surface profile of the substantially cylindrical cavity. The method may further comprise forming in the or each aperture a linkage between the core and the resilient sleeve when filling the mould. The method may comprise varying the resilience of the roller being fabricated by varying the angular relationship between the at least one aperture and the at least one recess in the surface profile of the substantially cylindrical cavity. The method may further comprise varying the resilience of the roller being fabricated by varying the size of the at least one aperture in the resilient tubular member, and/or the number and/or relative position of apertures where there are a plurality of apertures in the resilient tubular member.

The roller fabricated in accordance with the method may have any of the features of the roller defined in accordance with the first aspect of the invention and embodiments thereof.

The present applicant has appreciated that the predetermined angular relationship of the plurality of apertures to the plurality of features may have a significant effect on the overall stiffness of the roller. Thus, by varying the angular relationship, rollers of different stiffnesses may be made from the same materials. For example, registering the plurality of apertures with the plurality of features may give rise to a stiffer roller than one in which the plurality of apertures and plurality of features are angularly offset. The plurality of features may be configured to provide ribs (e.g. helical ribs) on the roller. The plurality of apertures may be arranged to follow a helical path.

The plurality of apertures may have a predetermined orientation, size, profile or spacing. The present applicant has also appreciated that the plurality of apertures may also be varied (either in orientation number, size or shape) to influence roller stiffness. For example, the apertures may be radial or non-radial, small or large, round or elongate, or close together or far apart.

An embodiment of the invention will now be described by way of example and with reference to the accompanying Figures in which:

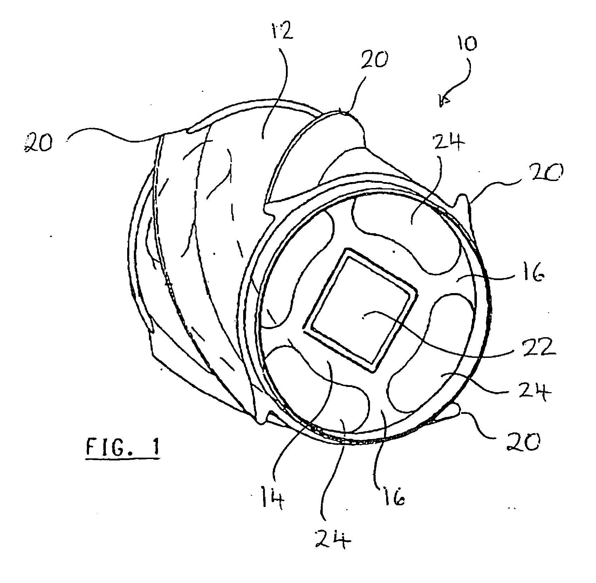

Figure 1 is a perspective view of a prior art roller;
Figure 2 is a cutaway end view of a roller embodying the present invention;
Figure 3 is an axial section of the roller of Figure 2;
Figure 4 is a schematic side view of the roller of Figure 2;
Figure 5 is a section view of the roller in Figure 4 along the line AA;
Figure 6 is a section view of a variant of the roller in Figure 4; and
Figure 7 is a schematic illustration of a method of fabricating the roller of Figure 2.

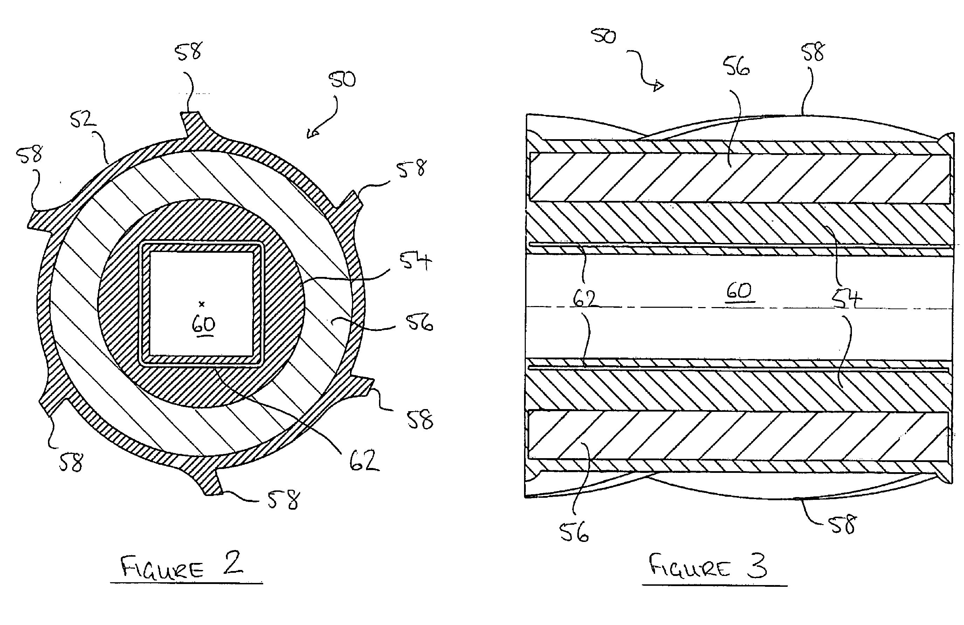

Figures 2-5 show a roller 50 embodying the present invention and comprising a resilient sleeve 52, a substantially rigid core 54, and a resilient tubular support member 56 extending between the resilient sleeve 52 and substantially rigid core 54. The resilient sleeve 52 has six, equally spaced helical ribs 58 on its radial outer periphery. The substantially rigid core 54 has an axial bore 60 for receiving a square-section drive shaft. The axial bore 60 is reinforced with a metal insert 62. The resilient sleeve 52 and substantially rigid core 54 comprise a solid polyurethane (e.g. polyether polyurethane), whereas the resilient tubular support member 56 is made from a resilient polyurethane foam (e.g. with a moulded density of 300 Kg/m³).

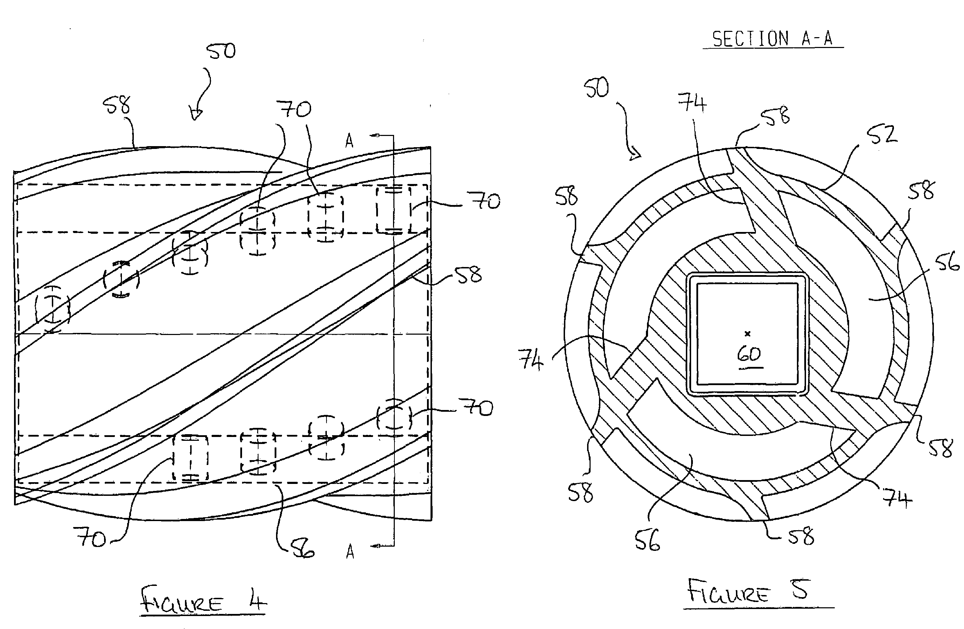

The resilient tubular support member 56 is shown in phantom lines in Figure 4, and includes a plurality of apertures 70 arranged in three helical paths along the length of the roller 50. Each helical path has the same pitch as the helical ribs 58. The apertures 70 extend in a non-radial direction through the wall 72 of the resilient tubular support member 56, and are filled with solid polyurethane acting as linkages 74 coupling the resilient sleeve 52 to the substantially rigid core 54. The linkages 74 help the roller 10 to resist internal shear forces created when the core 54 is driven by the drive shaft whilst the sleeve 52 is temporarily jammed by debris. As shown in Figure 5, the helical paths of the apertures 70 and linkages 74 are registered with three of the six helical ribs 58. In this way, one set of three helical ribs 58 is directly above the linkages 74 and will consequently be stiffer (i.e. less easily deformed in a radial direction) than another set of three helical ribs disposed between the linkages 74.

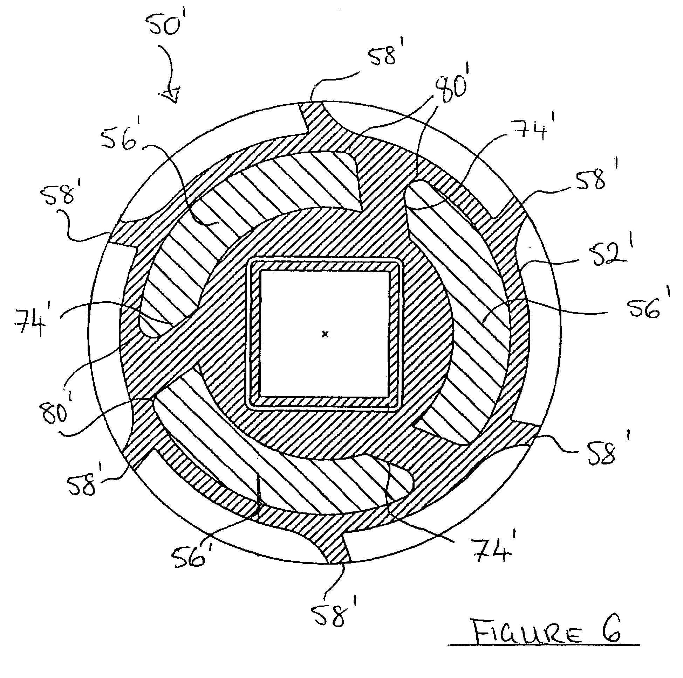

Figure 6 shows a variant 50' of the roller 50. The linkages 74' are angularly offset relative to the closest helical ribs 58'. Also, the linkages 74' are flared at the intersection with resilient sleeve 52', with rounded corners 80' replacing the sharp transitions seen in roller 50.

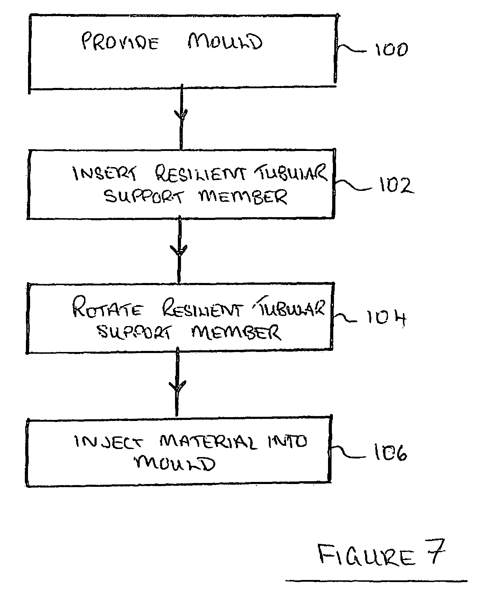

The roller 10 is fabricated in a mould using conventional moulding technology. The steps of the moulding method are illustrated in Figure 7. At step 100, a mould is provided. The mould has a substantially cylindrical cavity with a surface profile including a plurality of features (e.g. grooves to form ribs on the roller) which are circumferentially spaced around the substantially cylindrical cavity. At step 102, the resilient tubular support member 56 is inserted into the mould such that there is an annular space between the surface profile and the resilient tubular member. At step 104, the resilient tubular support member 56 is axially rotated relative to the mould so that the plurality of apertures 70 have a predetermined angular relationship with the plurality of features of the surface profile of the cylindrical cavity. For example, the plurality of apertures 70 may each be registered with a respective feature of the surface profile of the cylindrical cavity in order to produce roller 10. Alternatively, the plurality of apertures 70 may be angularly offset by a predetermined amount for every feature of the surface profile of the cylindrical cavity in order to produce a variant of roller 10. At step 106, material is injected into the cavity of the mould to form a roller with the resilient tubular support member 56 embedded therein. The roller will have a resilient sleeve outside the resilient tubular support member 56, and a substantially rigid core inside the resilient tubular support member 56, with linkages extending through the apertures 70 to couple the resilient sleeve to the substantially rigid core. Once formed, the resilience of the roller may be evaluated. If it is not optimum for its intended purpose (perhaps it is too stiff or not stiff enough) a replacement roller may be fabricated in the same mould, with the resilient tubular member modified in some way. For example, the size and/or number of apertures in the resilient tubular member may be increased/decreased so that the replacement roller has different properties to its predecessor.

## Claims

1. A roller (50) for use in apparatus configured to separate a bulb or root crop from debris, comprising:
a resilient sleeve (52);
a substantially rigid core (54) for engaging a drive shaft; and
support means extending between the substantially rigid core and the resilient sleeve; **characterised in that** the support means comprises a resilient tubular member (56).

2. A roller according to claim 1, further comprising a plurality of linkages extending through the resilient tubular member and coupling the resilient sleeve directly to the rigid core.

3. A roller according to claim 2, in which the linkages are integrally formed with the resilient sleeve, the substantially rigid core, or both the resilient sleeve and substantially rigid core.

4. A roller according to claim 2 or claim 3, in which the linkages extend through preformed apertures in the resilient tubular member.

5. A roller according to any one of claims 2 to 4, in which at least some of the linkages are arranged along a helical path.

6. A roller according to claim 5, in which the helical path has the same pitch as at least one helical rib on the radial outer periphery of the resilient sleeve.

7. A roller according to claim 6, in which the helical path and at least one helical rib are angularly offset by a predetermined amount to control the radial deformability of the roller.

8. A roller according to any one of the preceding claims, in which the resilient sleeve has at least one helical rib on the radial outer periphery of the resilient sleeve.

9. A method of fabricating a roller, comprising:
providing a mould having a substantially cylindrical cavity with a surface profile;
providing a resilient tubular member for insertion into the mould;
inserting the resilient tubular member into the mould such that there is an annular space between the surface profile and the resilient tubular member; and
filling the mould to form a core and a resilient sleeve with an outermost surface corresponding to the surface profile, the resilient tubular member being sandwiched between the core and the resilient sleeve.

10. A method according to claim 9, in which surface profile of the substantially cylindrical cavity has at least one recess.

11. A method according to claim 10, in which the resilient tubular member has a wall with at least one aperture extending therethrough, with the method further comprising positioning the resilient tubular member in the mould with the at least one aperture in a known angular relationship with the at least one recess in the surface profile of the substantially cylindrical cavity, and forming in the or each aperture a linkage between the core and resilient sleeve when filling the mould.

12. A method according to claim 11, further comprising varying the resilience of the roller being fabricated by varying the angular relationship between the at least one aperture and the at least one recess in the surface profile of the substantially cylindrical cavity.

13. A method according to claim 11 or claim 12, further comprising varying the resilience of the roller being fabricated by varying the size and/or number and/or relative position of the at least one aperture in the resilient tubular member.

14. A method according to any one of claims 10 to 13, in which the at least one recess comprises a plurality of helical channels.

## Patentansprüche

1. Rolle (50) zur Verwendung in einer Vorrichtung, die zum Ablösen von Schmutz von einer Knollen- oder Wurzelfrucht konfiguriert ist, die Folgendes umfasst:
eine elastische Hülse (52);
einen im Wesentlichen starren Kern (54) für den Eingriff mit einer Antriebswelle; und
ein Tragmittel, das zwischen dem im Wesentlichen starren Kern und der elastischen Hülse verläuft;
**dadurch gekennzeichnet, dass** das Tragmittel ein elastisches tubuläres Element (56) umfasst.

2. Rolle nach Anspruch 1, die ferner mehrere Verbindungselemente umfasst, die durch das elastische tubuläre Element verlaufen und die elastische Hülse direkt mit dem starren Kern verbinden.

3. Rolle nach Anspruch 2, wobei die Verbindungselemente einstückig mit der elastischen Hülse, dem im Wesentlichen starren Kern oder sowohl der elastischen Hülse als auch dem im Wesentlichen starren Kern ausgebildet sind.

4. Rolle nach Anspruch 2 oder Anspruch 3, wobei die Verbindungselemente durch vorgeformte Öffnungen in dem elastischen tubulären Element verlaufen.

5. Rolle nach einem der Ansprüche 2 bis 4, wobei wenigstens einige der Verbindungselemente entlang einer schraubenförmigen Bahn angeordnet sind.

6. Rolle nach Anspruch 5, wobei die schraubenförmige Bahn dieselbe Steigung wie wenigstens eine schraubenförmige Rippe auf der radialen Außenperipherie der elastischen Hülse hat.

7. Rolle nach Anspruch 6, wobei die schraubenförmige Bahn und die wenigstens eine schraubenförmige Rippe winkelmäßig um einen vorbestimmten Betrag versetzt sind, um die radiale Verformbarkeit der Rolle zu regeln.

8. Rolle nach einem der vorherigen Ansprüche, wobei die elastische Hülse wenigstens eine schraubenförmige Rippe auf der radialen Außenperipherie der elastischen Hülse hat.

9. Verfahren zum Herstellen einer Rolle, das Folgendes beinhaltet:
Bereitstellen einer Form mit einem im Wesentlichen zylindrischen Hohlraum mit einem Oberflächenprofil;
Bereitstellen eines elastischen tubulären Elements zum Einführen in die Form;
Einführen des elastischen tubulären Elements in die Form, so dass ein ringförmiger Raum zwischen dem Oberflächenprofil und dem elastischen tubulären Element vorliegt; und
Ausfüllen der Form zum Bilden eines Kerns und einer elastischen Hülse mit einer äußersten Fläche, die dem Oberflächenprofil entspricht, wobei das elastische tubuläre Element zwischen dem Kern und der elastischen Hülse eingeschlossen ist.

10. Verfahren nach Anspruch 9, wobei das Oberflächenprofil des im Wesentlichen zylindrischen Hohlraums wenigstens eine Aussparung hat.

11. Verfahren nach Anspruch 10, wobei das elastische tubuläre Element eine Wand mit wenigstens einer durch sie verlaufenden Öffnung aufweist, wobei das Verfahren ferner das Positionieren des elastischen tubulären Elements in der Form mit der wenigstens einen Öffnung in einer bekannten Winkelbeziehung zu der wenigstens einen Aussparung im Oberflächenprofil des im Wesentlichen zylindrischen Hohlraums und das Ausbilden eines Verbindungselemente zwischen dem Kern und der elastischen Hülse beim Füllen der Form in der oder jeder Öffnung beinhaltet.

12. Verfahren nach Anspruch 11, das ferner das Variieren der Elastizität der hergestellten Rolle durch Variieren der Winkelbeziehung zwischen der wenigstens einen Öffnung und der wenigstens einen Aussparung im Oberflächenprofil des im Wesentlichen zylindrischen Hohlraums beinhaltet.

13. Verfahren nach Anspruch 11 oder Anspruch 12, das ferner das Variieren der Elastizität der hergestellten Rolle durch Variieren der Größe und/oder Anzahl und/oder relativen Position der wenigstens einen Öffnung in dem elastischen tubulären Element beinhaltet.

14. Verfahren nach einem der Ansprüche 10 bis 13, wobei die wenigstens eine Aussparung mehrere schraubenförmige Kanäle umfasst.

## Revendications

1. Rouleau (50) destiné à une utilisation dans un appareil configuré pour séparer les débris d'une récolte de plantes-racines ou de tubercules, comprenant :
un manchon élastique (52) ;
un noyau sensiblement rigide (54) pour s'emboîter avec un arbre d'entraînement ; et
un moyen de support s'étendant entre le noyau sensiblement rigide et le manchon élastique ;
**caractérisé en ce que** le moyen de support comprend un élément tubulaire élastique (56).

2. Rouleau selon la revendication 1, comprenant en outre une pluralité de raccordements s'étendant à travers l'élément tubulaire élastique et reliant directement le manchon élastique au noyau rigide.

3. Rouleau selon la revendication 2, dans lequel les raccordements sont formés d'un seul tenant avec le manchon élastique, le noyau sensiblement rigide ou bien à la fois le manchon élastique et le noyau sensiblement rigide.

4. Rouleau selon la revendication 2 ou la revendication 3, dans lequel les raccordements s'étendent à travers des ouvertures préformées dans l'élément tubulaire élastique.

5. Rouleau selon l'une quelconque des revendications 2 à 4, dans lequel quelques-uns au moins des raccordements sont agencés le long d'un trajet hélicoïdal.

6. Rouleau selon la revendication 5, dans lequel le trajet hélicoïdal présente le même pas qu'au moins une nervure hélicoïdale sur la périphérie externe radiale du manchon élastique.

7. Rouleau selon la revendication 6, dans lequel le trajet hélicoïdal et au moins une nervure hélicoïdale sont décalés dans le plan angulaire suivant un degré prédéterminé afin de commander la déformabilité radiale du rouleau.

8. Rouleau selon l'une quelconque des revendications précédentes, dans lequel le manchon élastique possède au moins une nervure hélicoïdale sur la périphérie externe radiale du manchon élastique.

9. Procédé de fabrication d'un rouleau, comprenant les opérations consistant à :
mettre à disposition un moule présentant une cavité sensiblement cylindrique avec un profil superficiel ;
mettre à disposition un élément tubulaire élastique en vue de son insertion dans le moule ;
introduire l'élément tubulaire élastique dans le moule de sorte qu'il existe un espace annulaire entre le profil superficiel et l'élément tubulaire élastique ; et
remplir le moule afin de former un noyau et un manchon élastique ayant une surface située le plus à l'extérieur correspondant au profil superficiel, l'élément tubulaire élastique étant enserré entre le noyau et le manchon élastique.

10. Procédé selon la revendication 9, dans lequel le profil superficiel de la cavité sensiblement cylindrique présente au moins un évidement.

11. Procédé selon la revendication 10, dans lequel l'élément tubulaire élastique possède une paroi avec au moins une ouverture laquelle s'étend à travers celle-ci, alors que le procédé comprend en outre les opérations consistant à positionner l'élément tubulaire élastique dans le moule avec ladite au moins une ouverture suivant une corrélation angulaire connue par rapport audit au moins un évidement ménagé dans le profil superficiel de la cavité sensiblement cylindrique, et former dans ladite ouverture ou dans chaque ouverture un raccordement entre le noyau et le manchon élastique au moment du remplissage du moule.

12. Procédé selon la revendication 11, comprenant en outre l'opération consistant à faire varier l'élasticité du rouleau en train d'être fabriqué en faisant varier la corrélation angulaire entre ladite au moins une ouverture et ledit au moins un évidement ménagé dans le profil superficiel de la cavité sensiblement cylindrique.

13. Procédé selon la revendication 11 ou la revendication 12, comprenant en outre l'opération consistant à faire varier l'élasticité du rouleau en train d'être fabriqué en faisant varier la taille et/ou le nombre et/ou la position relative de ladite au moins une ouverture dans l'élément tubulaire élastique.

14. Procédé selon l'une quelconque des revendications 10 à 13, dans lequel ledit au moins un évidement comporte une pluralité de canaux hélicoïdaux.
